# EUROPÄISCHE PATENTSCHRIFT

(11) **EP 1 994 995 B1**
(45) Veröffentlichungstag und Bekanntmachung des Hinweises auf die Patenterteilung: **07.10.2009**
(21) Anmeldenummer: 08009403.0
(22) Anmeldetag: 21.05.2008
(51) Int. Cl.: B09B 1/00

(54) **Verfahren zur langzeitsicheren Verwahrung von lösungserfüllten Kavernen durch Unterschichten mit industriellen Abfällen und einer weiteren Nutzung des verdrängten Lösungsinventars in industriellen Prozessen**
Method for safe long term custody of solution-filled cavities through sub-layers with industrial waste and further use of the displaced solution in industrial processes
Procédé de protection durable de cavernes remplies de solutions par des sous-couches avec des déchets industriels et utilisation supplémentaire de l'inventaire de solutions refoulées dans des processus industriels

(30) Priorität: 21.05.2007 DE 102007023595
(43) Veröffentlichungstag der Anmeldung: 26.11.2008
(73) Patentinhaber: K-UTEC AG Salt Technologies, 99706 Sondershausen (DE)
(72) Erfinder: Krauke, Wolfgang, 99706 Sondershausen (DE); Lack, Dittmar, 99706 Sondershausen (DE); Lindenau, Annett, 06526 Sangerhausen (DE); Marx, Heinrich, 66583 Spiesen-Elversberg (DE); Thoma, Holger, 99706 Sondershausen (DE)
(74) Vertreter: Grünecker, Kinkeldey, Stockmair & Schwanhäusser Anwaltssozietät

(56) Entgegenhaltungen:
- EP-A- 0 230 913
- EP-A- 0 291 946
- EP-A- 0 320 393
- DE-A1- 3 411 998
- DE-A1- 3 833 676
- DE-A1-102004 052 854
- DE-C1- 3 423 387
- FR-A- 2 515 149

## Beschreibung

Die vorliegende Erfindung betrifft ein Verfahren, das es ermöglicht, lösungserfüllte Kavernen sowohl langzeitsicher durch Unterschichten des Kaverneninhalts mit Suspensionen auf der Basis von industriellen Abfällen im Dickstoffverfahren zu verwahren, als auch eine Migration der in den Abfällen enthaltenen mobilisierbaren chemisch-toxischen Bestandteile in den darüber stehenden Lösungskörper zu verhindern und somit die verdrängte Lösung industriell weiter verarbeiten zu können, ohne sie entsorgen zu müssen. Das Verfahren ist sowohl für Kavernen mit Steinsalzlösung als auch für MgCl₂-betonte Kavernenlösungen anwendbar.

Kavernen unterliegen entsprechend ihrer Teufenlage und des anstehenden Gebirgsdruckes einer Konvergenz. Die Konvergenz führt dazu, dass das Lösungsinventar in das Deckgebirge migriert und bei zu niedriger Mächtigkeit des salinaren Deckgebirges die Lösung den Grundwasserleiter erreichen kann und damit Zutritt zur Biosphäre erhält. Dies würde auch zutreffen für einen schlammförmigen Versatz von Abfällen, der mobile Fluide mit chemisch-toxischem Potential enthält und somit auch zu einer Beeinträchtigung der Biosphäre führen würde. Nach der Lehrmeinung (D.-A. Becker: Entwicklung und Anwendung eines Nahbereichsmodells zur Analyse der Langzeitsicherheit von Salzkavernen mit chemisch-toxischen Abfällen; GRS mbH und GFS GmbH; GRS 128,08/1991, FKZ: 02C0163 und 02C04551) ist die Langzeitsicherheit von Kavernen nur durch einen trockenen Versatz erreichbar und ein Versatz mittels Suspensionen als weniger geeignet eingestuft. Zur Realisierung eines Trockenversatzes einer Kaveme ist zuvor der Kaverneninhalt vollständig zu entfernen, was zu Standsicherheitsproblemen führt und nicht akzeptiert werden kann.

Die langzeitsichere Verwahrung einer Kaverne mit industriellen Abfällen ist nur ein Teil der Gesamtproblemlösung, der andere Problemkreis ist die Verwertung des Lösungsinventars der Kaverne. Es ist davon auszugehen, dass das Lösungsinventar der Kaverne durch den direkten Kontakt mit Abfallsuspensionen, die über ein lösliches chemisch-toxisches Potential verfügen, in einem Maße kontaminiert wird, das eine Verwertung in anderen Prozessen ausgeschlossen ist und die Entsorgung von Teilmengen, wie das verdrängte Überschussfluid, das zur Suspensionsherstellung nicht mehr benötigt wird, erfordert.

### Stand der Technik

In der Patentschrift DE 3411998 wird ein Verfahren zum Einbringen von festen, kleinteiligen Abfällen in Salzkavernen beschrieben. Der Abfall wird mit aus der Kaveme entnommener Steinsalzlösung zu einem pumpfähigen Gemisch verarbeitet und als solches in die Salzkaverne eingeführt. Nach einer Ruhezeit zum Absetzen der festen Abfallstoffe am Boden der Kaverne wird Lösung über dem abgesetzten Sediment abgezogen und das nächste Gemisch hergestellt und in die Kaverne eingeführt. Durch Wiederholung der Schritte wird die Kaveme verfüllt.

Das Verfahren sieht vor, dass in Fällen, in denen Anteile der festen Abfallstoffe in der Steinsalzlösung löslich sind und deren pH-Wert verändern oder lösliche Schwermetallverbindungen enthalten, vor Einführen des Gemisches in die Salzkaverne eine Neutralisation erfolgt bzw. im Falle der löslichen Schwermetallionen Fällungsmittel zugesetzt werden, die mit den Schwermetallen un- oder schwerlösliche Verbindungen bilden sollen.

Die in der obigen Patentschrift beschriebene Deponierung von Abfällen kann im Verbund in mehreren Salzkavernen erfolgen. Das pumpfähige Gemisch für eine Kaverne besteht aus Abfällen gleicher Genese und Zusammensetzung oder auch aus Mischprodukten verschiedener Abfälle. In die Salzkaverne können auch in Art und Zusammensetzung verschiedene Abfallstoffe nacheinander eingeführt werden. Dieses Verfahren ist wirtschaftlich sehr aufwendig, da die Abfälle ja bekannt für schwankende Eigenschaften sind - auch bei gleicher Genese - und Neutralisations- und Fällungsreaktionen zeitabhängig verlaufen, so dass eine Migration von chemisch-toxischem Potential in den Lösungskörper der Steinsalzkaverne nicht ausgeschlossen werden kann. Darüber hinaus sind mehrere Kavernen notwendig, um einen kontinuierlichen Betrieb aufrechterhalten zu können. Auf die langzeitsichere Verwahrung der Kaverne wird in der Patentschrift kein Bezug genommen.

In der Patentschrift DE 102004052854A1 wird ein Verfahren zur langzeitsicheren Verwahrung einer mit gesättigter NaCl-Lösung gefüllten Kaverne beschrieben.

Zunächst wird gesättigte Sole aus der Kaverne entnommen und zur Herstellung einer fließfähigen und pumpbaren Feststoffsuspension angemischt. Zur Herstellung der Feststoffsuspension werden vorzugsweise partikelförmige Rückstände aus der Müllverbrennung eingesetzt. Die so aufbereitete Feststoffsuspension wird danach über eine Förderrohrtour in die Kaverne eingeleitet, wo sie am Kavernenboden sedimentiert und nach Abschluss der Sedimentationsphase zu einem festen Füllkörper aushärtet, der in der Lage ist, den geostatischen Gebirgsdruck auf Dauer aufzunehmen und zu übertragen und durch Verhinderung der Konvergenz die endgültige, dauerhafte Stabilisierung der Kaveme herbeizuführen. Die Verfestigung festigung wird vorrangig durch die Eigenschaften des eingesetzten partikelförmigen Feststoffes in Verbindung mit der NaCl-Lösung oder gegebenenfalls durch Zugabe eines Bindemittels in geringen Mengen (in etwa 5 %) erreicht. Darüber hinaus sieht das Verfahren die Zugabe einer weiteren Feststofffraktion unmittelbar am Eintritt in das Verfüllbohrloch vor, deren Korngröße weit über der Korngröße des in der Suspension enthaltenen Feststoffes liegt, jedoch deutlich unterhalb des Durchlassquerschnittes der Förderrohrtour. Auf diese Weise soll ein besserer Verfestigungseffekt in der Kaverne erzielt werden. Der Überschuss an gesättigter Sole, ca. 50 % des vormaligen Kavernenvolumens, die für die Soleverfestigung und zur Verfüllung der Kaverne nicht benötigt wird, wird auf an sich bekannte Weise ausgelagert und entsorgt bzw. zwischengelagert. Die nach vorliegenden Verfahren anfallenden Überschusslösungen (ca. 50 % des Kaverneninhaltes) sind in jedem Fall kontaminiert und können nur aufgrund der spezifischen Situation vor Ort verwertet werden bzw. sie sind dann als u.U. gefährlicher Abfall einer wirtschaftlich aufwendigen Entsorgung zuzuführen.

Dokument EP-A-0 320 393 beschreibt ein Verfahren zum Einbringen von festen, pastösen oder flüssigen Abfällen in lösungserfüllte Kavernen. Dabei wird eine mit halogenhaltigen Lösungsmitteln enthaltende Fluidbarriere in die Kaverne eingefüllt.

Dokument EP-A-0 291 946 beschreibt ein Verfahren zur Einbringung von festen und schlammförmigen Abfällen in mit Salzsole gefüllte unterirdische Hohlräume. Die Salzsole wird dabei mit Chlorwasserstoffen unterschichtet.

Dokument EP-A-0 230 913 behandelt ein Verfahren zur Vorbehandlung von festen und schlammigen Abfallstoffen zur Einführung in untertägige Salzkavernen über ein Fallrohr.

### Kurze Beschreibung der Figur

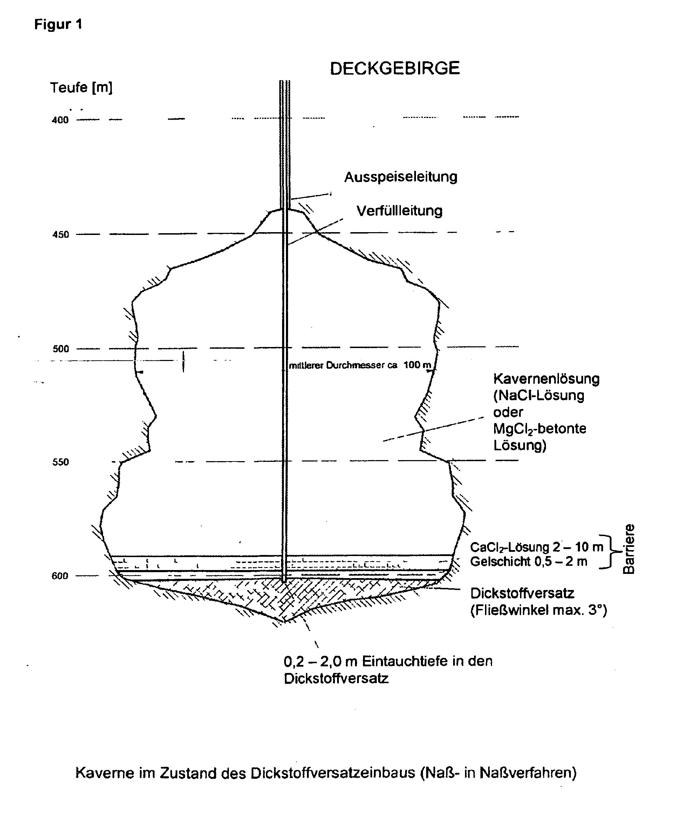

Figur 1 zeigt den schematischen Aufbau einer Kaverne, die mit einer Kavernenlösung gefüllt ist. Durch die in der Figur gezeigte Verfüllleitung kann zunächst die Fluidbarriere eingebracht werden, bevorzugt unterschichtet mit einer erfindungsgemäß einzusetzenden Gelschicht. Anschließend erfolgt der Dickstoffversatz, wozu Figur 1 bereits eine gewissen Einbringmenge offenbart. Durch die in der Figur gezeigte Ausspeiseleitung kann die verdrängte Kavernenlösung ausgeführt und einer weiteren Verarbeitung zugeführt werden.

### Aufgabenstellung

Der Erfindung liegt die Aufgabe zugrunde ein Verfahren zu entwickeln, das sowohl eine langzeitsichere Verwahrung von NaCl- bzw. MgCl₂-betonten Lösungskavernen mit Abfallsuspensionen, die über ein lösliches chemisch-toxisches Potential verfügen, als auch eine wirtschaftliche Verwertung des durch die Abfallsuspension verdrängten Lösungsinhalts, wie z. B. NaCl-Lösung im Sodaprozess, MgCl₂-Lösung zur Herstellung von Bischofit, Kaliumchlorid, Magnesiumhydroxid oder Magnesiumoxid gewährleistet.

### Kurze Beschreibung der Erfindung

Diese Aufgabe wird gelöst durch das Verfahren nach Anspruch 1, bevorzugte Ausführungsformen sind in den Ansprüchen 2 bis 15 sowie der nachfolgenden Beschreibung aufgeführt.

Die Aufgabe wird dadurch gelöst, dass als erster Schritt vor dem Einbringen der Abfallsuspension eine migrationshemmende Barriereschicht über den Kavernenboden platziert wird. Die Barriere besteht aus einem gegenüber dem Salzgestein der Kaverne gesättigtem Schutzfluid, bevorzugt auf der Basis von CaCl₂ und/oder MgCl₂. Die Dichte des Schutzfluides beträgt in der Regel 1,25 bis 1,45 g/cm³, sie muss jedoch, zur Ausbildung einer stabilen Dichteschichtung, mindestens 0,05 bis 0,15 g/cm³ über der Dichte der unterschichteten Lösung in der Kaverne liegen. Für den Aufbau dieser Barriere kommen neben synthetisch hergestellten Fluiden bevorzugt Salzlösungen aus der Abgasbehandlung von Müllverbrennungsanlagen mit Schwermetallfällung oder konzentrierte CaCl₂- und M₉Cl₂-Lösungen aus diversen industriellen Prozessen in Betracht.

Die in der vorliegenden Erfindung zum Einsatz kommende Fluidbarriere ist typischerweise eine auf Wasser basierende gesättigte Lösung, d.h. die Zusammensetzung des Schutzfluids umfasst üblicherweise keine organischen Lösungsmittel, insbesondere umfasst die Zusammensetzung des in der vorliegenden Erfindung zu verwendenden Schutzfluids keine messbaren Mengen an nicht mit Wasser mischbaren organischen Flüssigkeiten, insbesondere Chlorfluorkohlenwasserstoffe. In einer üblichen bevorzugten Ausführungsform der vorliegenden Erfindung ist das Schutzfluid eine wässrige Lösung frei an organischen Lösungsmitteln, insbesondere frei an Chlorfluorkohlenwasserstoffen. Derartige nicht mit Wasser mischbaren Flüssigkeiten, insbesondere Chlorfluorkohlenwasserstoffe werden manchmal im Stand der Technik eingesetzt, um ebenfalls eine Abtrennung von wässrigen Medien zu erreichen, wie beispielsweise in der DE 371 685 1 C2 angeführt. Die dort als wesentlich angeführten Chlorfluorkohlenwasserstoffe werden in der vorliegenden Erfindung üblicherweise und bevorzugt nicht eingesetzt. Wie insbesondere aus den weiter unten eingefügten erfindungsgemäßen Beispielen hervorgeht, ist die Zusammensetzung der Fluidbarriere, d.h. des Schutzfluides eine hochkonzentrierte, wässrige schwere Lösung, die gegenüber dem Salzgestein der Kaverne, in der das Schutzfluid Verwendung findet, eine gesättigte Lösung darstellt.

Die, gegenüber dem Lösungsinventar der Kavernen (Steinsalzlösung p=1,2 g/cm³, MgCl₂-Lösung p=1,3 g/l) spezifisch schwereren Lösungen werden über eine Rohrtour in die Kaverne eingespeist. Durch den Dichteunterschied Schutzfluid - Kaverneninhalt ist eine trennscharfe Unterschichtung des Lösungsinventars der Kaverne möglich. Überraschender Weise wurde gefunden, dass durch diese Barriere ein möglicher Schadstoffaustausch zwischen Dickstoffversatz und Kaverneninhalt nur durch langsam verlaufende Diffusionsvorgänge erfolgen kann, die jedoch im Versatz-Betriebszeitraum der Kaverne (ca. 10 Jahre) nicht zum Tragen kommen. Die verdrängte Lösung wird über eine zweite Rohrtour abgeführt und weiterverarbeitet. Die Einspeisungsrohrtour wird dicht über dem Kavernenboden - etwa 0,20 m - platziert und in dieser Position belassen. Die Schichtstärke der Fluidbarriere sollte mindestens 1 bis 2 m betragen, bevor mit dem Einspeisen der Dickstoffsuspension begonnen werden kann. In Abhängigkeit vom Grad der löslichen Bestandteile der Dickstoffsuspension kann vor dem Einbringen des Dickstoffes bzw. auch während des laufenden Versatzprozesses eine weitere Schutzschicht innerhalb der Fluidbarriere dadurch aufgebaut werden, dass durch Vermischen von Lösungen des Typs CaCl₂ bzw. MgCl₂ mit einem CaCl₂- und/oder MgCl₂-Gehalt von ≥ 360 bis 400 g/l mit kalk- und/oder magnesiabasierten Bindemitteln basische Erdalkalichloridhydrate erzeugt werden, die im ausreagierten Zustand eine dauerhaft gelartige Konsistenz aufweisen. Diese Füllstoffe wurden in den Patenten DE 197 37 583 C2 und DE 197 37 584 A1 beschrieben, die hier durch Verweis mit umfasst sind.

Die mit basischen Erdalkalichloridhydraten (Calcium- und/oder Magnesiumchloridhydrate) angereicherte Suspension wird analog zur Unterschichtung der Fluidbarriere über dem Kavernenboden eingebracht und bildet eine gelartige Zone eines mikrokristallinen Netzwerkes aus feingliedrigen, nadelförmigen Kristallen mit einer großen spezifischen Oberfläche, die migrierende Schwermetallionen sorbieren und gegebenenfalls aufgewirbelte Schwebstoffe filtrieren kann. Die gelartige Zone sollte im Endausbau eine Schichtstärke von 0,5 bis 2,0 m aufweisen. Die Barriere insgesamt ist sukzessive auf eine Endschichtstärke von 5 bis 10 m anzuheben. Die Fluidbarriere stellt bereits eine sichere Barriere zur Verhinderung eines signifikanten Schadstoffeintrags aus den eingebrachten abfallbasierten Feststoffen in den Lösungskörper der Kaverne dar, die durch den Einbau einer Gelschicht zusätzlich verstärkt werden kann. Das gelartige Material weist typischer Weise eine Dichte von 1,55 bis 1,65 g/cm³ auf. Der Eintrag erfolgt verwirbelungsfrei im Nass-in-Nass-Verfahren, d. h. die Verfüllrohrtour wird 0,5 bis 2,0 m im Dickstoffversatz gehalten.

Aufgrund ihrer Beweglichkeit wandert die Barriere entsprechend dem Verfüllgrad mit Abfallsuspension abrissfrei nach oben mit.

Die Abfallsuspensionen werden als sedimentationsstabile Mischungen verschiedener Abfälle nach Rezepturvorgaben im Nass-in-Nass-Einbauverfahren eingebracht, d. h. die Verfüllrohrtour steht 0,5 bis 2 m im Dickstoffversatz. Dadurch wird ein verwirblungsfreier Einbau der Abfallsuspension erreicht und die Integrität der Barriere (Schutzfluid und Gelzone) nicht beeinträchtigt. Das stufenweise Ziehen der Verfüllrohrtour im Nass-in-Nass-Einbauverfahren des Dickstoffs zur Vermeidung von Verstopfern in der Rohrtour erfolgt anhand des eingebrachten Suspensionsvolumens und des sich abzeichnenden Druckanstiegs in der Transportleitung.

Bei der Auswahl der Abfälle wird vorzugsweise auf CaCl₂-reiche Abfälle, die eine hohe Dichte des Porenfluides der Dickstoffsuspension gewährleisten, mit einem vergleichsweise niedrigen Wasserstoffbildungspotential orientiert. Die Abfälle werden in einer dafür ausgelegten Intensivmischanlage mit Lösung aus der Kaverne angemischt und zur Einstellung der rheologischen Eigenschaften und zum weitgehenden Abbau des Gasbildungspotentials etwa 4 bis 6 Stunden in Suspendiergefäßen gerührt, bevor sie zur Unterschichtung in die Kaverne verpumpt werden. Die Fließeigenschaften der Dickstoffsuspension sind so eingestellt, dass eine nahezu selbstnivellierende Ausbreitung mit Fließwinkeln von max. 3 grd erfolgt.

Das Intensivmischverfahren zur Herstellung der Dickstoffsuspensionen wurde in der Patentschrift DE10207969 hinlänglich beschrieben, die hier durch Verweis mit umfasst ist.

Die Einstellung einer definierten Steifigkeit des abgebundenen Dickstoffversatzes zum Abfangen der Konvergenzvorgänge und damit zur langzeitsicheren Verwahrung der Kaverne wird durch den Rezepturaufbau gelöst. Für Kavernen in Teufenlagen bis zu 620 m ist ein Steifemodul von mindestens 150 bis 1000 MPa erforderlich.

Eine beispielhafte Rezeptur ist auf nachfolgende Stoffgruppen abgestellt:
- Stoffgruppe 1:: Filterstäube aus Müllverbrennungsanlagen, Sondermüllverbrennungsanlagen, Kraftwerken mit Abfallmitverbrennung, Biomassekraftwerken, Klärschlammverbrennungsanlagen
- Stoffgruppe 2:: Neutralsalze aus Müllverbrennungs- und Sondermüllverbrennungsanlagen
- Stoffgruppe 3:: Basische Salze aus Müllverbrennungs- und Sondermüllverbrennungsanlagen

Die Rezeptur wird als Vormischung eingesetzt bzw. aus den Stoffgruppen vor Ort angemischt. Die Stoffgruppenanteile in der Trockensubstanz betragen:
- Stoffgruppe 1:: 40 bis 50 Ma%
- Stoffgruppe 2:: 20 bis 30 Ma%
- Stoffgruppe 3:: 30 bis 40 Ma%

Das Mischungsverhältnis trockener Abfall zu Anmischflüssigkeit beträgt 45 bis 55 : 55 bis 45 Ma%. Orientiert wird auf Suspensionsdichten > 1,5 g/cm³. In Abhängigkeit von der sich einstellenden fluiden Phase der Dickstoffsuspension erfolgt die Art und Massezugabe an Bindemittel zur Erreichung der entsprechenden Steifigkeit der Dickstoffmasse bei Unterschichtung des Kaverneninventars. Wird die fluide Phase der Dickstoffsuspension durch Alkalichlorid-Gehalte > 230 g/l dominiert, bei CaCl₂-Gehalten < 130 g/l, so empfiehlt sich der Einsatz von Zement bzw. hydraulisch abbindenden Bindemitteln (z. B. Bypass-Stäube). In Abhängigkeit vom Stoffbestand ist ein Bindemittelzusatz von 5 - 20 Ma% bezogen auf den Trockenstoffanteil notwendig, um die geforderte Steifigkeit zu erreichen.

Bei hohen MgCl₂- oder CaCl₂-Gehalten der fluiden Phase der Dickstoffsuspension im Bereich > 240 g/l empfiehlt sich der Einsatz von Ca- und/oder Mg-haltigen Bindemitteln in Form von -oxiden oder -hydroxiden. Der Bindemittelzusatz beträgt in diesem Fall 5 - 15 Ma% bezogen auf die Trockensubstanz.

Die folgenden Absätze definieren weitere bevorzugte Ausführungsformen:
Bevorzugt ist es, dass die Anmischflüssigkeit Kavernenlösung als Steinsalzlösung oder als MgCl₂-betonte Lösung zur Anwendung kommt und sowohl CaCl₂-Lösung als auch Brauchwasser sowie geeignete Industrieabwässer einsetzbar sind.

Bevorzugt ist es, dass zur Erreichung der geomechanischen Langzeitsicherheit der Kavernen bis zu Teufen von 620 m Steifenmodule ≥ 150 GPa, vorzugsweise ≥ 500 MPa erforderlich sind und der eingebrachte Dickstoffversatz durch abfallbasierte Bindemittel bzw. durch handelsübliche Bindemittel gestützt wird.

Bevorzugt ist es, dass die Bindemittelzugabe zur Erreichung der notwendigen Steifigkeit des Versatzes abhängig ist von den Alkali- und Erdalkalichloridanteilen der fluiden Phase der Dickstoffsuspension, und bei hohen Alkalichloridgehalten ≥ 230 g/l, vorzugsweise ≥ 250 g/l und CaCl₂-Gehalten < 130 g/l Zemente oder zementhaltige Abfälle, z. B. Bypass-Stäube mit einem Anteil von 5 - 20 Ma%, bezogen auf die Trockenmischung, vorzugsweise 10 - 15 Ma% zur Anwendung kommen, und bei hohen MgCl₂- oder CaCl₂-Gehalten der fluiden Phase der Dickstoffsuspension im Bereich ≥ 240 g/l, vorzugsweise 280 g/l, Ca- und oder Mghaltige Bindemittel in Form von Oxiden oder Hydroxiden eingesetzt werden, wobei der Bindemittelanteil bezogen auf die Trockenmischung in diesem Fall 5 - 15 Ma%, vorzugsweise 10 Ma%, beträgt.

Bevorzugt ist es, dass nach dem Verdrängen des nutzbaren Lösungsinventars der Kaverne durch den Dickstoffeinsatz die überstehende Barriere als Anmischflüssigkeit für den Dickstoffversatz genutzt und so eine Vollverfüllung der Kaverne erreicht wird.

Die nachstehende beispielhafte Zeichnung soll die Erfindung näher erläutern.
- 1. Schritt:: Einbau der CaCl₂-Barriere auf eine Anfangshöhe von mindestens 1 m, vorteilhaft 2 m
- 2. Schritt:: Unterschichtung der CaCl₂-Schicht mit einer gelartigen Zone anfänglich 0,2 im Endausbau etwa 2 m
- 3. Schritt:: Unterschichten der Barriere mit Dickstoff im Nass-in-Nass-Einbau, d. h. die Verfüllrohrtour steht etwa 0,5 - 2 m im Dickstoffversatz und wird entspre- chend des Einbaufortschritts gezogen. Der Fließwinkel des Dickstoffversatzes ist max. auf 3 grd durch die Rezeptur eingestellt.

Der zweite Schritt ist nicht zwingend und kann auch nachfolgend zum Dickstoffversatzeinbringen realisiert werden.

Nach Verdrängung des Nutzlösungsinventars erfolgt eine vollständige Verfüllung der Kaverne derart, dass das Schutzfluid als Anmischflüssigkeit für den Dickstoffversatz genutzt wird, der im Bedarfsfall auch mit einer höheren Steifigkeit eingestellt und als Verschlusspfropfen wirksam werden kann.

## Patentansprüche

1. Verfahren zum geomechanisch langzeitsicheren Verfüllen von lösungserfüllten Kavernen mit abfallbasierten Dickstoffsuspensionen nach Rezepturvorgabe bei gleichzeitiger Verwertung der verdrängten Überschusslösung in industriellen Prozessen **dadurch gekennzeichnet, dass** vor dem Einbringen der Dickstoffsuspension eine Fluidbarriere, bestehend aus einer hochkonzentrierten, wässrigen Schwerelösung, die gegenüber dem Salzgestein der Kaverne eine gesättigte Lösung ist, mit der kontrolliert der Lösungsinhalt der Kaverne unterschichtet wird, eingebracht wird und erst dann der Dickstoffversatzeinbau im Nass-in-Nass-Verfahren erfolgt.

2. Verfahren nach Anspruch 1, **dadurch gekennzeichnet, dass** die Fluidbarriere zusätzlich mit einer Gelschicht, umfassend basischen Erdalkalichloridhydrate verstärkt wird.

3. Verfahren nach Anspruch 1 oder 2 **dadurch gekennzeichnet, dass** die Fluidbarriere aus einer gegenüber dem Salzgestein der Kaverne hochkonzentrierten, bevorzugt gesättigten CaCl₂-Lösung, beispielhaft als Flüssigabfall aus Müllverbrennungsanlagen mit Schwermetallfällung, die eine Lösungsdichte von 0,05 bis 0,15 g/cm³ über der Dichte der unterschichteten Kavemenlösung aufweist (Arbeitsbereich 1,25 bis 1,45 g/cm³), und mit einer Mindestschichtstärke vor dem Einbau der Dickstoffsuspension von 1,0 m, vorzugsweise 2,0 m, das in der Kaverne enthaltene Lösungsinventar wie NaCl-Lösung oder eine MgCl₂-betonte Lösung unterschichtet.

4. Verfahren nach Anspruch 3, **dadurch gekennzeichnet, dass** die Schichtstärke der Fluidbarriere auf insgesamt 5 bis 10 m vergrößert wird.

5. Verfahren nach Anspruch 1, 2, 3 und/oder 4 **dadurch gekennzeichnet, dass** die Barriereschicht auch durch Mischungen von CaCl₂- und MgCl₂-Lösung oder durch hoch konzentrierte MgCl₂-Lösungen dargestellt werden können, die vergleichbare Eigenschaften wie Dichte und Sättigungsgrad gegenüber dem Wirtsgestein) wie die CaCl₂-Lösung gemäß Anspruch 3 aufweisen.

6. Verfahren nach Anspruch 1, 2, 3, 4 und/oder 5 **dadurch gekennzeichnet, dass** das Unterschichten des in der Kaverne enthaltenen Lösungsinventars derart erfolgt, dass eine Rohrtour dicht (etwa 0,20 m) über dem Kavernenboden platziert wird und durch die spezifisch schwerere CaCl₂- und/oder MgCl₂-Lösung die Verdrängung des Lösungsinventars der Kaverne erfolgt.

7. Verfahren nach Anspruch 2, 3, 4, 5 /undoder 6 **dadurch gekennzeichnet, dass** eine weitere Schutzschicht innerhalb der CaCl₂-Fluidbarriere **dadurch** aufgebaut wird, dass durch intensives Vermischen von CaCl₂-Lösung mit CaCl₂-Gehalten ≥ 400 g/l, vorzugsweise 420 g/l, mit kalkbasierten Bindemitteln, wie Branntkalk oder Kalkhydrat basische Calciumchloridhydrate erzeugt werden, die eine dauerhaft gelartige Konsistenz aufweisen.

8. Verfahren nach Anspruch 7 **dadurch gekennzeichnet, dass** die erzeugte gelartige Schutzschicht analog der CaCl₂-Barriereschicht dicht über dem Kavernenboden eingetragen wird und auf Grund des geringen Dichteunterschiedes von 0,02 g/cm³ gegenüber der CaCl₂-Lösung unterschichtend wirkt und ein mikrokristallines Netzwerk aus feingliedrigen, nadelförmigen Kristallen mit großer Oberfläche bildet, die migrierende Schwermetallionen sorbieren und Schwebstoffe filtrieren.

9. Verfahren nach Anspruch 1, 2, 3, 4, 5 und/oder 6 **dadurch gekennzeichnet, dass** anstelle von CaCl₂-Lösungen zur Herstellung der Gelschicht auch Mischlösungen aus CaCl₂ und MgCl₂ bzw. MgCl₂-dominierte Lösungen eingesetzt werden, deren Dichte in Größenordnung der vorgelegten CaCl₂-Lösung liegt und neben kalk- auch magnesiabasierte Bindemittel eingesetzt werden können.

10. Verfahren nach Anspruch 2, 3, 4, 5, 6, 7, 8 und/oder 9 **dadurch gekennzeichnet, dass** die gelartige Zone im Endausbau eine Schichtstärke von 0,5 bis 2,0 m aufweist.

11. Verfahren nach Anspruch 2, 3, 4, 5, 6, 7, 8, 9 und/oder 10 **dadurch gekennzeichnet, dass** der Aufbau der gelartigen Zone auch erst nachfolgend, d. h. im Wechsel mit dem Dickstoffeintrag erfolgen kann.

12. Verfahren nach Anspruch 1, 2, 3, 4, 5, 6, 7, 8, 9, 10 und/oder 11 **dadurch gekennzeichnet, dass** nach Aufbau der Fluidbarriere von mindestens 1 m, vorzugsweise 2 m, der Einbau der Dickstoffsuspension über die gleiche, dicht über dem Kavernenboden stehende Rohrtour erfolgt.

13. Verfahren nach mindestens einem der Ansprüche 1 bis 12 **dadurch gekennzeichnet, dass** die über den Dickstoffversatz liegende Barriereschicht entsprechend dem Verfüllfortschritt an Dickstoffversatz abrissfrei mitwandert.

14. Verfahren nach Anspruch 1, 2, 3, 4, 5, 6, 7, 8, 9, 10, 11, 12 und/oder 13 **dadurch gekennzeichnet, dass** der Dickstoffversatz beispielhaft durch eine Rezeptur **gekennzeichnet** ist, die folgende Bestandteile aufweist:
Stoffgruppe 1: Filterstäube aus MVA, SAV, Kraftwerken mit Abfallmitverbrennung, Biomassekraftwerken, Klärschlammverbrennungsanlagen
Stoffgruppe 2: Neutralsalze aus der Rauchgasreinigung von Müll- und Sonderabfallverbrennungsanlagen
Stoffgruppe 3: Basische Salze aus der Rauchgasreinigung von Müll- und Sonderabfallverbrennungsanlagen
Stoffgruppe 4: Bindemittel (bei Bedarf)

15. Verfahren nach Anspruch 14 **dadurch gekennzeichnet, dass** die Stoffgruppe 1 in der Trockenmischung mit 40 bis 50 Ma%, vorzugsweise mit 45 Ma%, die Stoffgruppe 2 mit 20 - 30 Ma%, vorzugsweise mit 25 Ma%, die Stoffgruppe 3 mit 30 bis 40 Ma%, vorzugsweise mit 35 Ma% eingesetzt wird, wobei bevorzugt das Mischungsverhältnis Trockenstoff (Abfall) zu Anmischflüssigkeit 45 bis 55 Ma% : 55 bis 45 Ma% beträgt und weiter bevorzugt auf Suspensionsdichten > 1,5 g/cm³, vorzugsweise 1,55 bis 1,65 g/cm³ eingestellt wird.

## Claims

1. Method for the geomechanically long term safe filling of solution-filled caverns with waste-based suspensions of high viscosity materials according to a specified composition while simultaneously using the displaced excess solution in industrial processes, **characterised in that** before the suspension of high viscosity materials is introduced a fluid barrier is introduced consisting of a highly concentrated aqueous heavy solution which is a saturated solution in relation to the rock salt of the cavern, which is used in controlled manner to form a layer underneath the solution contained in the cavern, and only then is the backfill of high viscosity suspension introduced by the wet-in-wet method.

2. Method according to claim 1, **characterised in that** the fluid barrier is additionally reinforced with a gel layer comprising basic alkaline earth chloride hydrates.

3. Method according to claim 1 or 2, **characterised in that** the fluid barrier, consisting of a preferably saturated CaCl₂ solution that is highly concentrated relative to the rock salt of the cavern, for example as liquid waste from refuse incineration plants with heavy metal precipitation, having a solution density of 0.05 to 0.15 g/cm³ greater than the density of the cavern solution which it underlies (working range 1.25 to 1.45 g/cm³), and with a minimum layer thickness before the incorporation of the high viscosity suspension of 1.0 m, preferably 2.0 m, forms a layer underneath the stock of solution such as NaCl solution or a predominantly MgCl₂ solution contained in the cavern.

4. Method according to claim 3, **characterised in that** the layer thickness of the fluid barrier is increased to a total of 5 to 10 m.

5. Method according to claim 1, 2, 3 and/or 4, **characterised in that** the barrier layer may also be constituted by mixtures of CaCl₂ and MgCl₂ solution or by highly concentrated MgCl₂ solutions which have comparable properties, such as density and saturation level relative to the host rock, to the CaCl₂ solution according to claim 3.

6. Method according to claim 1, 2, 3 4 and/or 5, **characterised in that** the layer underneath the stock of solution contained in the cavern is produced by placing a pipe string a short distance (about 0.20 m) above the floor of the cavern and the stock of solution in the cavern is displaced by the CaCl₂ and/or MgCl₂ solution having a higher specific gravity.

7. Method according to claim 2, 3, 4, 5 and/or 6, **characterised in that** another protective layer is formed inside the CaCl₂ fluid barrier by producing basic calcium chloride hydrates that have a permanently gel-like viscosity, by intensively mixing CaCl₂ solution with CaCl₂ contents ≥ 400 g/l, preferably 420 g/l, with lime-based binders such as burnt lime or hydrated lime.

8. Method according to claim 7, **characterised in that** the gel-like protective layer produced is applied analogously to the barrier layer of CaCl₂ just above the floor of the cavern and by reason of the small density differential of 0.02 g/cm³ relative to the CaCl₂ solution it acts as an underlying layer and forms a microcrystalline network of fine, needle-shaped crystals with a large surface area which absorb migrating heavy metal ions and filter suspended matter.

9. Method according to claims 1, 2, 3, 4,5 and/or 6, **characterised in that** instead of CaCl₂ solutions for preparing the gel layer it is also possible to use mixed solutions of CaCl₂ and MgCl₂ or MgCl₂-dominated solutions the density of which is of the same order of magnitude as the CaCl₂ solution put in, and besides lime-based binders, magnesia-based binders may also be used.

10. Method according to claims 2, 3, 4, 5, 6, 7, 8 and/or 9, **characterised in that** the gel-like zone in the finished structure has a layer thickness of 0.5 to 2.0 m.

11. Method according to claim 2, 3, 4, 5, 6, 7, 8, 9 and/or 10, **characterised in that** the construction of the gel-like zone may take place only subsequently, i.e. alternating with the addition of the high-viscosity substance.

12. Method according to claim 1, 2, 3, 4, 5, 6, 7, 8, 9, 10 and/or 11, **characterised in that** after the formation of the fluid barrier of at least 1 m, preferably 2 m, the high-viscosity suspension is introduced through the same pipe string located just above the floor of the cavern.

13. Method according to at least one of claims 1 to 12, **characterised in that** the barrier layer located above the backfill of high-viscosity material migrates in crackfree manner as the filling operation with high-viscosity backfill progresses.

14. Method according to claims 1, 2, 3, 4, 5, 6, 7, 8, 9, 10, 11, 12 and/or 13, **characterised in that** the backfill of high-viscosity material is **characterised** for example by a composition having the following ingredients:
substance group 1: filter dusts from refuse incineration plants, specialwaste incinerators, power stations incorporating waste incineration, biomass power stations, clarified sludge incineration plants
substance group 2: neutral salts from the purification of flue gas from refuse and special waste incineration plants
substance group 3: basic salts from the purification of flue gas from refuse and special waste incineration plants
substance group 4: binders (as required)

15. Method according to claim 14, **characterised in that** substance group 1 is used in the dry mix at 40 to 50 wt%, preferably at 45 wt%, substance group 2 is used at 20 - 30 wt%, preferably at 25 wt%, substance group 3 is used at 30 to 40 wt%, preferably at 35 wt%, while preferably the mixing ratio of dry matter (waste) to mixing liquid is 45 to 55 wt% : 55 to 45 wt% and more preferably is adjusted to suspension densities > 1.5 g/cm³, preferably 1.55 to 1.65 g/cm³.

## Revendications

1. Procédé de remblayage durable à long terme, par voie géomécanique, de cavités remplies de solutions par des suspensions de matières consistantes à base de déchets selon la consigne de recette avec utilisation simultanée de la solution excédentaire refoulée dans des processus industriels, **caractérisé en ce que,** avant l'introduction de la suspension de matières consistantes, une barrière fluidique, comportant une solution lourde aqueuse hautement concentrée, qui est une solution saturée par rapport à la roche saline de la cavité, par laquelle les solutions contenues dans la cavité sont sous-remblayées de façon contrôlée, est introduite, et la mise en place par des matières consistantes dans le procédé humide sur humide est assuré seulement après.

2. Procédé suivant la revendication 1, **caractérisé en ce que** la barrière fluidique est renforcée en supplément par une couche de gel, comprenant des hydrates de chlorure alcalino-terreux basiques.

3. Procédé suivant l'une des revendications 1 ou 2,
**caractérisé en ce que** la barrière fluidique en une solution CaCl₂ de préférence saturée, hautement concentrée par rapport à la roche saline de la cavité, par exemple sous forme de déchets liquides d'incinérateurs d'ordures ménagères avec précipité de métaux lourds, qui présente une masse volumique de solution de 0,05 à 0,15 g/cm³ au-dessus de la masse volumique de la solution sous-remblayée de la cavité (plage de travail 1,25 à 1,45 g/cm³), et avec une épaisseur de couche minimale avant la mise en place par la suspension de matières consistantes de 1,0 m, de préférence 2,0 m, sous-remblaye l'inventaire de solutions contenu dans la cavité, telles que solution NaCl ou une solution marquée MgCl₂.

4. Procédé suivant la revendication 3, **caractérisé en ce que** l'épaisseur de couche de la barrière fluidique est augmentée à 5 à 10 m au total.

5. Procédé suivant les revendications 1, 2, 3 et/ou 4,
**caractérisé en ce que** la couche de barrière peut être également représentée par des mélanges de solution CaCl₂ et MgCl₂ ou par des solutions MgCl₂ hautement concentrées, qui présentent des propriétés comparables, telles que masse volumique et taux de saturation par rapport à la roche hôte, que la solution CaCl₂ suivant la revendication 3.

6. Procédé suivant les revendications 1, 2, 3, 4 et/ou 5, **caractérisé en ce que** le sous-remblayage de l'inventaire de solutions contenu dans la cavité s'effectue de telle sorte qu'un tube est placé juste (environ 0,20 m) au-dessus du fond de la cavité et le refoulement de l'inventaire de solutions de la cavité s'effectue par la solution CaCl₂ et/ou MgCl₂ spécifiquement plus lourde.

7. Procédé suivant les revendications 2, 3, 4, 5 et/ou 6, **caractérisé en ce qu'**une couche de protection supplémentaire à l'intérieur de la barrière fluidique CaCl₂ est créée du fait que des hydrates de chlorure de calcium basiques sont produits par mélange intensif de solution CaCl₂ avec des teneurs CaCl₂ ≥ 400 g/l, de préférence de 420 g/l, avec des liants à base de chaux, tels que chaux vive ou hydrate de chaux, lesquels hydrates présentent une consistance gélatineuse durable.

8. Procédé suivant la revendication 7, **caractérisé en ce que** la couche de protection gélatineuse produite, de manière analogue à la couche de barrière CaCl₂, est introduite juste au-dessus du fond de la cavité, a un effet de sous-remblayage en raison de la faible différence de masse volumique de 0,02 g/cm³ par rapport à la solution CaCl₂, et forme un réseau micro-cristallin de cristaux en forme d'aiguilles, à maillons fins, d'une surface importante, qui sorbent les ions métaux lourds migrants et filtrent des matières en suspension.

9. Procédé suivant les revendications 1, 2, 3, 4, 5 et/ou 6, **caractérisé en ce que,** au lieu de solutions CaCl₂ pour créer la couche de gel, il est également possible d'utiliser des mélanges de solutions CaCl₂ et MgCl₂ ou des solutions à dominance MgCl₂, dont la masse volumique est de l'ordre de grandeur de la solution CaCl₂ collectée et des liants à base de magnésie, outre des liants à base de chaux, sont également utilisables.

10. Procédé suivant les revendications 2, 3, 4, 5, 6, 7, 8 et/ou 9, **caractérisé en ce que** la zone gélatineuse présente à l'achèvement une épaisseur de couche de 0,5 à 2,0 m.

11. Procédé suivant les revendications 2, 3, 4, 5, 6, 7, 8, 9 et/ou 10, **caractérisé en ce que** la création de la zone gélatineuse peut également ne s'effectuer que par la suite, c'est-à-dire en alternance avec l'apport de matières consistantes.

12. Procédé suivant les revendications 1, 2, 3, 4, 5, 6, 7, 8, 9, 10 et/ou 11, **caractérisé en ce que,** après la création de la barrière fluidique d'au moins 1 m, de préférence 2 m, la mise en place de la suspension de matières consistantes s'effectue par l'intermédiaire du même tube, situé juste au-dessus du fond de la cavité.

13. Procédé suivant l'une au moins des revendications 1 à 12, **caractérisé en ce que** la couche de barrière, située au-dessus du remblai de matières consistantes, migre sans rupture en conformité avec l'avancement de la mise en place de matières consistantes.

14. Procédé suivant les revendications 1, 2, 3, 4, 5, 6, 7, 8, 9, 10, 11, 12 et/ou 13, **caractérisé en ce que** la mise en place de matières consistantes se **caractérise par** exemple par une recette, qui présente les composants suivantes :
- Groupe de matières 1 : poussières de filtration d'incinérateurs d'ordures ménagères, de déchets spéciaux, de centrales électriques avec co-combustion des déchets, de centrales à biomasse, d'incinérateurs de boues résiduaires,
- Groupe de matières 2 : sels neutres de l'épuration des fumées d'incinérateurs d'ordures ménagères et de déchets spéciaux,
- Groupe de matières 3 : sels basiques de l'épuration des fumées d'incinérateurs d'ordures ménagères et de déchets spéciaux,
- Groupe de matières 4 : liants (en cas de besoin).

15. Procédé suivant la revendication 14, **caractérisé en ce que** le groupe de matières 1 est employé dans le mélange sec avec 40 à 50% en masse, de préférence avec 45% en masse, le groupe de matières 2 avec 20 - 30% en masse, de préférence avec 25% en masse, le groupe de matières 3 avec 30 à 40% en masse, de préférence avec 35% en masse, le rapport de mélange matière sèche (déchets) par rapport au liquide de mélange étant de 45 à 55% en masse : 55 à 45% en masse et étant réglé de préférence sur des masses volumiques de suspension > 1,5 g/cm³, de préférence de 1,55 à 1,65 g/cm³.
